(19) Europäisches Patentamt
European Patent Office
Office européen des brevets

(11) Publication number: **0 417 028 A2**

# (12) EUROPEAN PATENT APPLICATION

(21) Application number: **90630148.6**

(22) Date of filing: **30.08.90**

(51) Int. Cl.[5]: **C08J 3/00**, C08J 5/24, //C08L79:08

(30) Priority: **31.08.89 US 401211**

(43) Date of publication of application: **13.03.91 Bulletin 91/11**

(84) Designated Contracting States: **DE FR GB**

(71) Applicant: **UNITED TECHNOLOGIES CORPORATION**
**United Technologies Building 1, Financial Plaza**
**Hartford, CT 06101(US)**

(72) Inventor: **Scola, Daniel A.**
**83 Stonepost Road**
**Glastonbury, Connecticut 06033(US)**
Inventor: **Vontell, John H.**
**143 Carter Street**
**Manchester, Connecticut 06040(US)**

(74) Representative: **Schmitz, Jean-Marie et al**
**OFFICE DENNEMEYER S.à.r.l. P.O. Box 1502**
**L-1015 Luxembourg(LU)**

## (54) Method for fabricating crosslinked polyimide high temperature composites and resins.

(57) A pretreatment process for fabricating polyimide composites from resin or prepreg, thereby reducing the formation of void producing or blister producing gases at higher temperatures during a subsequent post cure cycle. The pretreatment process includes heating a resin or prepreg to an elevated temperature and holding at said temperature for a period of time sufficient to achieve complete imidization of the resin or prepreg but such that no substantial crosslinking of the resin or prepreg has occurred. Processes are also disclosed for the subsequent cure of the resin or prepreg to form polyimide high temperature fiber reinforced composites.

EP 0 417 028 A2

## TECHNICAL FIELD

The present invention relates to a means for fabricating fiber reinforced crosslinked polyimide composites.

### Background Art

State-of-the-art processes to fabricate crosslinked polyimide high temperature polymer/graphite composites includes a pretreatment imidization process for removing volatiles by advancing the resin/composite of laid-up uncured plies from room temperature to 200 °C before the application of pressure. This portion of the fabrication process is carried out independent of the consolidation of the uncured plies, typically in an autoclave or compression molding process. From room temperature to 200 °C, most of the gas releasing reactions which are required for imidization and/or chain extension have occurred, and it is assumed that further processing at elevated temperatures serves primarily to consolidate and crosslink the resin/fiber system, with a minimal amount of cure. This minimal amount of cure is assumed to have a benign affect on the fabrication process.

A typical pretreatment process consists of drying and imidizing freshly made prepreg in an oven cycle at 93 °C (200 °F) for one hour, 149 °C (300 °F) for an additional hour, and 204 °C (400 °F) for another two hours. The material is said to be capable of being put through the final stages of cure with no further evolution of volatiles, starting, if desired, with a press and/or mold preheated to 221 °C (430 °F).

Experience has shown, however, that composites fabricated in this manner can possess properties which range from low to high void, are more prone to blistering, and do not consolidate properly. Voids and blisters are undesirable because they tend to detract from the physical properties and thermo-oxidative stability characteristics of these polymers. As such, overall yield and long term reliability of such composite systems is reduced as composite fabrication costs increase.

Thus, a long felt need exists to convert polyimide systems into stable materials by pretreating such systems in a process which prevents evolution of volatile gas products on further processing at the higher temperatures required for consolidation and final cure of such systems.

### Disclosure of the Invention

Accordingly, it is an object of the present invention to provide a means for fabricating stable polyimide composites which are capable of undergoing post cure at elevated temperatures without the formation of void producing or blister producing gases.

Another objective is to produce composites and resin samples of excellent quality and reproducibility.

The method comprises heating a resin or prepreg, said resin or prepreg having reinforced fibers and a reaction mixture, and said reaction mixture initially comprising an aromatic diamine, an end cap monomer and an aromatic dianhydride, a diester-diacid of an aromatic dianhydride or a tetra acid of an aromatic dianhydride, in the absence of pressure to an elevated temperature, said elevated temperature being greater than 204 °C, for a period of time sufficient to achieve complete imidization of said resin or prepreg but such that no substantial cross-linking of said resin or prepreg has occurred.

A further aspect of the disclosure includes methods for making a fiber reinforced crosslinked polyimide resin matrix composite article, wherein the article is substantially free of internal voids and surface blisters.

A first method for making the article comprises heating a plurality of plies of resin or prepreg according to the above method to form plies of imidized resin or prepreg, stacking the plies of imidized resin or prepreg to form a laminated imidized resin or prepreg and curing the laminated imidized resin or prepreg to form the article.

A second method for making the article comprises stacking a plurality of plies of resin or prepreg to form a laminated prepreg, heating the laminated resin or prepreg according to the method described above to form a laminated imidized resin or prepreg and curing the laminated imidized resin or prepreg to form the article.

The foregoing and other features and advantages will become more apparent from the specification and claims.

Best Mode for Carrying Out the Invention

The reaction mixture of the process of the present invention initially comprises a mixture of monomeric reactants. Suitable mixtures of monomeric reactants are those which react upon heating to form a fusible oligomeric imide intermediate wherein the intermediate may be cross linked by further heating to form a thermosetting polyimide resin.

PMR (meaning polymerizable monomer reactants) resins exemplify such reaction mixtures. Preferably, these resins initially comprise a mixture of 1,4'-phenylene diamine (PPDA), the dimethylester of 4,4'-hexafluoroisopropylidene biphthalic acid (6FDE) and the monomethylester of 5-norbornene 2,3 dicarboxylic acid (NE).

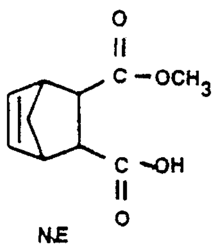

NE

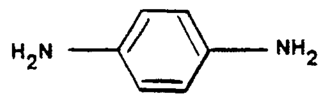

PPDA

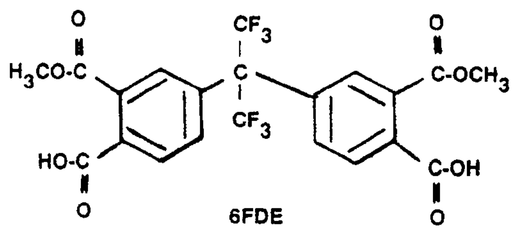

6FDE

A mixture of PPDA, 6FDE and NE is a molar ratio of 2 moles NE/n+1 moles PPDA/n moles 6FDE reacts upon heating to form an imidized oligomer having a theoretical structure:

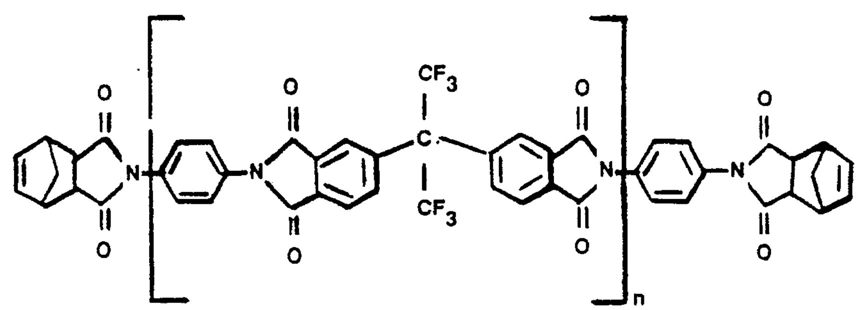

PMR-II OLIGOMER

The number of repeating units, n, may be varied to form a homologous series of PMR resins wherein each resin of the series is characterized by the theoretical average molecular weight of the imidized oligomer intermediate. The monomeric molar ratio, and the average molecular weight of the imidized oligomer for a series of homologous PMR resins are given in Table I.

Table 1

| Molar Ratio NE/6FDE/PPDA | Average MPW Oligomer | Resin Designation |
|---|---|---|
| 2/2.161/1.161 | 1000 | PMR-II 10 |
| 2/2.684/1.684 | 1270 | PMR-II 12.7 |
| 2/2.742/1.742 | 1300 | PMR-II 13 |
| 2/3.129/2.129 | 1500 | PMR-II 15 |
| 2/4.097/3.097 | 2000 | PMR-II 20 |
| 2/5.996/4.996 | 2980 | PMR-II 29.8 |
| 2/6.034/5.034 | 3000 | PMR-II 30 |
| 2/9.908/8.903 | 5000 | PMR-II 50 |
| 2/10.005/9.00 | 5050 | PMR-II 50.5 |

Analogous resins may be formulated by substituting an aromatic dianhydride, a tetra acid of an aromatic dianhydride or a diester-diacid of an aromatic dianhydride for the 6FDE. For example, the dimethylester of 4,4′, (2,2,2-trifluoro-1-phenlethylidene) biphthalic tetracarboxylic acid depicted below, hereinafter referred to as 3F dimethyl ester, is substituted for 6FDE in an analogous series of polyimides.

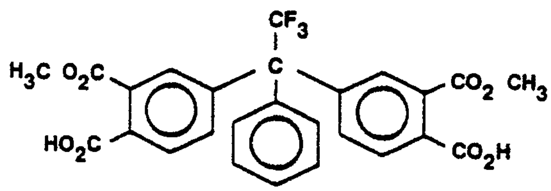

**3F Dimethyl Ester**

Analogous compounds may also be formulated by substituting different aromatic diamines for paraphenylene diamine (PPDA). For example, aromatic diamines may be substituted for PPDA to give an analogous PMR-II type polyimide resin as shown below.

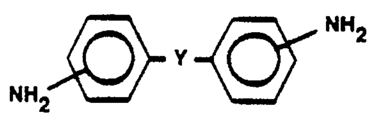

**where Y = $SO_2$, -O-, -S, -SO-, -NH, $-\overset{O}{\overset{\|}{C}}-$, $-SiH_2$,**
**-Se-, $-CH_2$, -NR**
**where R = alkyl or aryl group.**

Similar compounds may be formulated by substituting other end caps monomers for the NE. Examples of other suitable end caps monomers include the monomethylester of itaconic acid (ITE), the monomethylester of 2,5-bicyclo (2.2.1) -heptadiene-2,3-dicarboxylic acid (NDE) and the monomethylester of maleic acid (MAE).

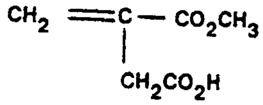

ITE

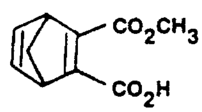

NDE

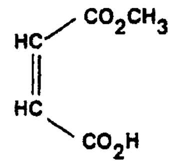

MAE

Processing aids may also be included in the reaction mixture. For example, N-phenylnadimide has been found to be useful as a reactive viscosity modifier to lower the melt viscosity.

The fiber reinforcement in the process of the present invention may comprise graphite fibers, carbon fibers, glass fibers, refractory ceramic fibers or silicon carbide fibers. Graphite fibers are preferred for applications in which high modulus fibers are required. Glass fibers are preferred in application in which lower modulus fibers are acceptable. Woven fiber cloth, unidirectional fiber tapes or fiber rovings are impregnated with the solution of reaction mixture and the solvent is evaporated to form the "prepreg". Composite articles made by the process of the present invention preferably include between about 30 volume percent and about 60 volume percent fiber reinforcement.

Single plies of prepreg may be pretreated according to the process of the present invention to form single plies of imidized prepreg and the plies of imidized prepreg may be laid up to form a laminated imidized prepreg. Alternatively, prepreg plies may be laid up to form laminated prepreg and the laminated prepreg may be pretreated according to the present invention to form a laminated imidized prepreg. In either case, the laminated imidized prepreg of the present invention may be cured by conventional autoclave or compression molding techniques to form a fiber reinforced crosslinked polyimide matrix composite article that is substantially free of internal voids and surface blisters.

Heating the prepreg produces time dependent rheological and chemical changes in the reaction mixture. For example, complex viscosity data for a pretreated PMR-II-20/CELION® 6000 (BASF, Parispany, New Jersey) fiber uniprepreg is shown in Table 2.

Table 2

| EFFECT OF PRETREATMENT TEMPERATURE ON COMPLEX VISCOSITY PMR-II-20/CELION® 6000 PREPREG (RT -> 380 °C, 5 °C/min) | | | | |
|---|---|---|---|---|
| Pretreatment | Temp. @ Initial Softening °C | Initial Softening Viscosity Poise | Temp. @ Minimum Visc., °C | Minimum Viscosity Poise |
| 200 °C/1 hr | 225 | $1.2 \times 10^7$ | 330 | $4 \times 10^6$ |
| 250 °C/1 hr | 260 | $1.5 \times 10^7$ | 335 | $5 \times 10^6$ |
| 275 °C/1 hr | 280 | $2.2 \times 10^8$ | 355 | $7 \times 10^6$ |

The data reveals that both the minimum viscosity temperature and minimum viscosity increase with an increased pretreatment temperature. This suggests that additional imidization occurs with increased temperature. The data also suggests that 250 °C and 275 °C pretreated PMR-II-20 prepreg is capable of additional processing into a composite.

As illustrated by the above example, the viscosity of the reaction mixture decreases while the rate at which the crosslinked polyimide is formed increases with increasing temperature. Defining the critical temperature range for processing the resin or prepreg according to the present invention involves balancing the decrease in the viscosity of the reaction mixture and the increase in the rate at which the oligomer reacts to form the crosslinked polyimide. This temperature range becomes critical to the process for forming void or blister free cross-linked polyimide composites.

The resin or prepreg is heated at substantially ambient pressure to an elevated temperature within the critical range. The absence of external pressure to the system is important to retard the gas forming reactions. Elevated temperature means a temperature greater than 204 °C but no greater than the temperature required for the onset of cure. Preferably, the resin or prepreg is heated from room temperature up to a temperature range from about 250 °C to about 275 °C.

Above this temperature range, the cross-linking reaction is too rapid to permit removal of volatile

components and still provide a substantially non-crosslinked material. Below this temperature range, the viscosity of the reaction mixture is too high to permit removal of volatile components within a reasonable time. As such, some volatiles often remain during the consolidation process. Therefore, the present invention utilizes a critical temperature range to ensure that imidization and other gas forming reactions are completed thus allowing for a maximum amount of volatiles to be removed within a reasonable processing time.

The resin or prepreg is maintained at this elevated temperature range for a period of time sufficient to achieve complete imidization of the resin or prepreg. It is important, however, that no substantial cross-linking, i.e. less than 5%, of the composite occurs for the above mentioned reasons. As such, a desirable hold time is between about 30 minutes to about 120 minutes. It is especially preferred that the hold time is about 30 minutes to about 60 minutes because such times have been shown to produce composites with excellent qualities and reproducibility.

The resin or prepreg may be maintained at a temperature within the critical temperature range under subatmospheric pressure so that volatile impurities and volatile reaction products can be removed from the resin or prepreg during the heating process. If such a condition is employed, it is preferred that the subatmospheric pressure correspond to a vacuum of greater than about 200 mm of mercury because this increases the rate of the gas forming reactions. It is particularly preferred that the subatmospheric pressure corresponds to a vacuum of between 500 mm of mercury and 600 mm of mercury because under these conditions the gas forming reactions are more complete.

The resin or prepreg is subsequently cooled to produce a molding material, i.e. a partially cured material analogous to a conventional "B-stage" fiber prepreg material, which may be fully cured by further heating. Unlike conventional B-stage materials, the pretreated resin or prepreg of the present invention is substantially free of volatile impurities and reaction products.

As noted above, laminated imidized fiber-reinforced resin or prepreg of the present invention may be consolidated and cured according to convention vacuum bag or compression molding procedures to form a composite article. For example, a laminated imidized fiber prepreg of the present invention may be consolidated and cured by heating the prepreg to an elevated temperature between about 290 °C and about 320 °C under superatmospheric pressure maintained for a time period between about 1 hour and 2 hours to form the fiber reinforced crosslinked polyimide matrix composite article. It is preferred that a superatmospheric pressure between about 100 psi and about 2000 psi be applied to the prepreg during the heating.

Finally, the fiber reinforced crosslinked polyimide matrix composite article so formed may be subjected to a conventional post cure, e.g. by maintaining the article at a temperature between about 320 °C and about 370 °C for a time period between about 18 hours and about 24 hours.

The fiber reinforced polyimide matrix article formed by the process of the present invention is substantially free of internal voids and surface blisters.

While the process of the present invention is described primarily in terms of fiber reinforced polyimide matrix composite articles, it may be readily appreciated that the process provides similar advantages to particulate reinforced polyimide matrix articles and to nonreinforced polyimide articles.

The following example is given to illustrate the method of the present invention. It is not, however, intended to limit the generally broad scope of the present invention.

## Example

CELION® 6000 (BASF, Parsippany, New Jersey) fiber reinforced PMR-II-30 was investigated to apply the thermal analysis and rheology data to two composite fabrication cycles. CELION® 6000 (6K) fiber (available from BASF, Parsippany, New Jersey) was first rinsed in acetone to wet the fiber. The fiber was then wound around a rotating drum having a diameter of 15.2" to a width of 4.5" (compression molding) and 4.0" (autoclave molding, Table 5 & 6). PMR-II-30 resin was dissolved in methanol to produce a dilute resin solution. The dilute solution was manually brushed onto the rotating drum to the desired wet weight percent and left to air dry to form the fiber reinforced resin impregnated prepregs. The prepregs were laid up and pretreated in air under ambient pressure at three levels, 200 °C/1 hr, 250 °C/1 hr, and 275 °C/1 hr and then subjected to compression molding cycles 1 or 2 as indicated in Table 3.

Table 3

COMPOSITE PROCESSING CURE CYCLES FOR PRETREATED PMR-II-30/CELION® 6000 COMPOSITES

CYCLE 1
Room Temp. -> 250° C (485° F), 8.3° C (15° F)/min, hold 60 min, apply 1000 psi at 250° C;
250° C (485° F) -> 371° C (700° F)/min, 5.5 ° C (10° F)/min, hold 60 min, apply 1000 psi;
Postcure at 370° C for 24 hours.
CYCLE 2
Room Temp. -> 290° C (555° F), 11° C (20° F)/min, apply 1000 psi at 290° C;
290° C (555° F) -> 371° C (700° F)/min, 5.5 ° C (10° F)/min, hold 120 min, apply 1000 psi;
Postcure at 370° C for 24 hours.

The data for the prepreg material PMR-II-30/CELION® 6K is listed in Table 4.

Table 4

| EFFECT OF PMR-II-30/CELION® 6000 PREPREG PRETREATMENT TEMPERATURE ON COMPOSITE QUALITY | | |
|---|---|---|
| Prepreg Pretreatment | Composite Fabrication Cycle | Composite Quality Based On Optical Microscopy Cross Section |
| 200° C/1 hr | 1 | many voids between plies, poor |
| 250° C/1 hr | 1 | some voids within bundles, fair |
| 275° C/1 hr | 1 | very few voids between plies, excellent |
| 275° C/1 hr | 2 | very few voids between plies and within bundle, good |

As illustrated above, cycle 1 with the 275° C/1 hr pretreated prepreg yielded an excellent composite with very few microvoids while the composite fabricated from the state-of-the-art process (200° C/1 hr pretreatment) gave high void composites. Also, 250° C/80 minutes pretreated prepreg fabricated by cycles 3 and 4 (Table 5), yielded excellent composites (Table 6).

Table 5

PROCESS STUDIES -

PMR-II-30/CELION® 6000 PREPREG

(Pretreated Prepreg @ 250° C/80 minutes)

CYCLE 3 Compression Molding (Dimensions 4.5" x 10" x 0.10)
Room Temp. -> 200° C @ 5° C/min, contact pressure, then 1000 psi at temperature, hold 10 min, 5° C/min;
200° C -> 250° C @ 2° C/min (1000 psi), 10 min), release p and reapply;
250° C -> 316° C @ 2° C/min (1000 psi, 1 hr) -> 371° C at 2° C/min (1000 psi, 2 hrs);
371° C -> 275° C @ 5° C/min (1000 psi -> Room Temp (ambient pressure);

Postcure 370° C/24 hours (Table 6).

Table 5 Cont'd.

PROCESS STUDIES -

PMR-II-30/CELION® 6000 PREPREG

(Pretreated Prepreg @ 250° C/80 minutes)

CYCLE 4 Autoclave Molding (Dimensions 4.0" x 4.0" x 0.1)
Room Temp. -> 150° C at 7° F/min (full vacuum, 25 psi), 15 min hold;
150° C -> 250° C @ 7° F/min (full vacuum, 200 psi), 30 min hold;
250° C -> 370° C @ 7° F/min (full vacuum, 200 psi), 2 hrs hold;
371° C -> 232° C @ 7° F/min, 200 psi, release p under hold;
Postcure 370° C/24 hours (Table 6).

Table 6

| POSTCURE COMPOSITES PMR-II-30/CELION®6000 (370° C/24 hrs) | |
|---|---|
| Molding Method | Quality of Composites after molding cycle and postcure |
| Compression | no blistering - some microporosity |
| Autoclave | no blistering, no voids excellent composite |
| Autoclave | no blistering, no voids |

The PMR-II-30/CELION® 6000 data show that the higher pretreatment temperature is conducive to the fabrication of composites with minim:s voids.

Volatile release at high temperatures during polymer/graphite fiber composite fabrication increases the risk of void and blister formation in composites. The pretreatment of a prepreg or resin by the process of the present invention minimizes the probability of void and blister formation, thereby yielding composites and resins of excellent quality and reproducibility. As a result, these composites provide the strength needed for high temperature applications, such as aerospace and the like.

Although this invention has been shown and described with respect to a preferred embodiment, it will be understood by those skilled in the art that various changes in the form and detail thereof may be made without departing from the spirit and scope of the claimed invention.

## Claims

1. A pretreatment process for fabricating polyimide composites from resin or prepreg by heating said resin or prepreg, said resin or prepreg having reinforcing fibers and a reaction mixture, and said reaction mixture initially comprising an aromatic diamine, an end cap monomer, and an aromatic dianhydride, a diester-diacid of an aromatic dianhydride or a tetra acid of an aromatic dianhydride, to an elevated temperature wherein the improvement comprises:
said elevated temperature being greater than 204° C (400° F), for a period of time sufficient to achieve complete imidization of said resin of prepreg but such that no substantial crosslinking of said resin or

prepreg has occurred,

thereby reducing the formation of void producing and blister producing gases at high temperatures during a subsequent post cure cycle.

2. The pretreatment process according to claim 1 wherein said aromatic diamine is selected from the group consisting of para(1,4′)phenylene and

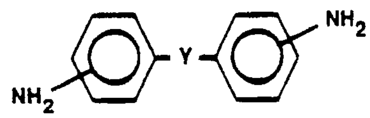

**wherein Y = $SO_2$, -O-, -S, -NH, $-\overset{O}{\overset{\|}{C}}-$, $-SiH_2$, -Se-, $-CH_2-$, -NR**

**wherein R = alkyl group, aryl group.**

wherein R = alkyl group, aryl group.

3. The pretreatment process according to claim 2 wherein said aromatic diamine is para (1,4′) phenylene.

4. The pretreatment process according to claim 1 wherein said end cap monomer is selected from the group consisting of the monomethylester of 5-norbornene 2,3 dicarboxylic acid, ITE, NDE; and MAE.

5. The pretreatment process according to claim 4 wherein said end cap monomer is the monomethylester of 5-norbornene 2,3 carboxylic acid.

6. The pretreatment process according to claim 1 wherein said aromatic dianhydride, a diester-diacid of an aromatic dianhydride, or a tetra acid of an aromatic dianhydride is 4,4′ hexafluoroisopropylidene biphthalic acid.

7. The pretreatment process according to claim 1 wherein said reaction mixture is the dimethylester of 4,4′ hexafluoroisopropylidene biphthalic acid, 1,4′-phenylene diamine, and the monomethylester of 5-norbornene 2,3 dicarboxylic acid.

8. The pretreatment process according to claim 1 wherein said elevated temperature is between about 250°C and about 275°C.

9. The pretreatment process according to claim 1 wherein said time is between about 30 minutes and about 120 minutes.

10. The pretreatment process according to claim 1 wherein said prepreg is heated to an elevated temperature between about 250°C and about 275°C for a period of time between about 30 minutes and about 120 minutes.

11. A process for fabricating crosslinked polyimide high temperature polymer/graphite fiber reinforced composite articles which comprises the steps of:

heating a plurality of plies of resin or prepreg, said plies of resin or prepreg having reinforcing fibers and a reaction mixture, and said reaction mixture initially comprising an aromatic diamine, an end cap monomer, and an aromatic dianhydride, a diester-diacid of an aromatic dianhydride or a tetra acid of an aromatic dianhydride, in the absence of pressure to an elevated first temperature, said elevated first temperature being greater than 204°C (400°F), for a period of time sufficient to achieve complete imidization of said resin or prepreg but such that no substantial crosslinking or said resin or prepreg has occurred;

stacking plies of imidized resin or prepreg to form a laminated imidized resin or prepreg;

heating the laminated imidized resin or prepreg under superatmospheric pressure to a second temperature for a second period of time, to form the crosslinked polyimide high temperature polymer/graphite fiber composite article by consolidating the plies and crosslinking the imide intermediate;

wherein the composite article so formed is substantially free of internal voids and surface blisters.

12. The process according to claim 11 wherein said reaction mixture is the dimethylester of 4,4′ hexafluoroisopropylidene biphthalic acid, 1,4′ -phenylene diamine, and the monomethylester of 5-norbornene 2,3 dicarboxylic acid.

13. The process according to claim 11 wherein said elevated first temperature is between about 250°C and about 275°C.

14. The process according to claim 11 wherein said first time is between about 30 minutes and about 120 minutes.

15. The process according to claim 11 wherein said resin or prepreg is heated to an elevated first temperature between about 250°C and about 275°C for a period of time between about 30 minutes and

about 120 minutes.

16. The process according to claim 11 wherein said resin or prepreg is heated to a second temperature between about 290 °C and about 320 °C for a period of time between about 1 hour and about 2 hours.

17. The process according to claim 11 wherein said resin or prepreg is heated to an elevated first temperature between about 250 °C and about 275 °C for a period of time between about 30 minutes and about 120 minutes and said resin or prepreg is further heated to a second temperature between about 290 °C and about 320 °C for a period of time between about 1 hour and about 2 hours.

18. A process according to claim 9 additionally comprising the step of:

heating the crosslinked polyimide high temperature polymer/graphite fiber reinforced composite to a temperature between about 320 °C and about 370 °C for a time period between about 8 hours and about 24 hours to form a post cured cross-linked polyimide high temperature polymer/graphite fiber reinforced composite,

wherein said composite is substantially free of internal voids and surface blisters.

19. A process for fabricating crosslinked polyimide high temperature polymer/graphite fiber reinforced composite articles which comprises the steps of:

stacking a plurality of plies of resin or prepreg, said plies of resin or prepreg having reinforcing fibers and a reaction mixture, and said reaction mixture initially comprising an aromatic diamine, an end cap monomer and an aromatic dianhydride, a diester-diacid of an aromatic dianhydride or a tetra acid of an aromatic dianhydride, to form a laminated resin or prepreg;

heating the laminated resin or prepreg in the absence of pressure to an elevated first temperature, said elevated first temperature being greater than 204 °C (400 °F), for a period of time sufficient to achieve complete imidization of said resin or prepreg but such that no substantial cross-linking of said resin or prepreg has occurred to form a laminated imidized resin or prepreg; and

heating the laminated imidized resin or prepreg under superatmospheric pressure to a second temperature for a second period of time, to form the cross-linked polyimide high temperature polymer/graphite fiber reinforced composite article by consolidating the plies and cross-linking the imide intermediate;

wherein the composite article so formed is substantially free of internal voids and surface blisters.

20. The process according to claim 19 wherein said reaction mixture is the dimethylester of 4,4′ hexafluoroisopropylidene biphthalic acid, 1,4′-phenylene diamine, and the monomethylester of 5-norbornene 2,3 dicarboxylic acid.

21. The process according to claim 19 wherein said elevated first temperature is between about 250 °C and about 275 °C.

22. The process according to claim 19 wherein said first time is between about 30 minutes and about 120 minutes.

23. The process according to claim 19 wherein said resin or prepreg is heated to an elevated first temperature between about 250 °C and about 275 °C for a period of time between about 30 minutes and about 120 minutes.

24. The process according to claim 19 wherein said resin or prepreg is heated to a second temperature between about 290 °C and about 320 °C for a period of time between about 1 hour and about 2 hours.

25. The process according to claim 19 wherein said resin or prepreg is heated to an elevated first temperature between about 250 °C and about 275 °C for a period of time between about 30 minutes and about 120 minutes and said resin or prepreg is further heated to a second temperature between about 290 °C and about 320 °C for a period of time between about 1 hour and about 2 hours.

26. A process according to claim 19 additionally comprising the step of:

heating the crosslinked polyimide high temperature polymer/graphite fiber reinforced composite to a temperature between about 320 °C and about 370 °C for a time period between about 8 hours and about 24 hours to form a post cured crosslinked polyimide high temperature polymer/graphite fiber reinforced composite,

wherein said composite is substantially free of internal voids and surface blisters.